**Europäisches Patentamt**

**European Patent Office**

**Office européen des brevets**

(19)

(11) **EP 1 229 514 A2**

(12) **EUROPÄISCHE PATENTANMELDUNG**

(43) Veröffentlichungstag:
**07.08.2002   Patentblatt 2002/32**

(51) Int Cl.⁷: **G10K 11/165**

(21) Anmeldenummer: **02000680.5**

(22) Anmeldetag: **11.01.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **02.02.2001  DE 10104604**

(71) Anmelder: **DaimlerChrysler AG**
**70567 Stuttgart (DE)**

(72) Erfinder:
• **Borchers, Ingo, Dr.**
  **88690 Uhldingen-Mühlhofen (DE)**

• **Hartweg, Martin, Dr.**
  **89155 Erbach (DE)**
• **Michel, Josef, Dr.**
  **89081 Ulm (DE)**
• **Roitzheim, Rolf-Dirc, Dr.**
  **89160 Dornstadt (DE)**
• **Tomaschko, Silvia, Dr.**
  **89075 Ulm (DE)**
• **Wang, Ping, Dr.**
  **89075 Ulm (DE)**
• **Schnur, Jürgen**
  **71254 Ditzingen (DE)**

(54) **Bauteil mit schwingungsdämpfenden Eigenschaften sowie Material und Verfahren zur Herstellung eines derartigen Bauteils**

(57)   Die Erfindung betrifft ein Bauteil mit schwingungsdämpfenden Eigenschaften, ein Gemenge zur Herstellung des Bauteils sowie ein Verfahren zur Herstellung eines derartigen Bauteils. Das weist Bauteil granulat- und/oder korn- und/oder plättchenförmigen Piezopartikel auf, die zumindest zu 10 Vol-% in einer Polymermatrix eingebettet sind. Zur Verbesserung der Dämpfwirkung weisen zumindest einige der Piezopartikel für sich jeweils eine von Null verschiedene Polarisation auf.

## Figur 3

EP 1 229 514 A2

**Beschreibung**

Die Erfindung betrifft ein Bauteil mit schwingungsdämpfenden Eigenschaften, ein Gemenge zur Herstellung des Bauteils, sowie ein Verfahren zur Herstellung eines derartigen Bauteils, gemäß den Oberbegriffen der Ansprüche 1, 14 bzw. 16 - 20, wie sie u.a. aus dem gattungsbildenden zugrundegelegten Artikel "New damping materials composed of piezoelectric and electroconductive, particalled polymer composites: effect of electromechanical coupling factor" von M. Sumita u.a., in Makromol. Chem. Rapid Commun. 12, S. 657-661 (1991) als bekannt hervorgeht.

Aus dem gattungsbildend zugrundegelegten Artikel ist eine Folie bekannt, bei der in einer Polymermatrix Piezopartikel aus einer Piezokeramik sowie als Leitmittel Graphit eingelagert ist. Gemäß dieser Veröffentlichung erfolgt hier eine Dämpfung von Schwingungen bei einem Graphitanteil zwischen ca. 5 und ca. 9 Vol-%. In diesem Bereich steigt gleichzeitig die elektrische Leitfähigkeit der Folie sehr stark an.

Die Aufgabe der Erfindung ist es, die vorbekannte Beschichtung dahingehend weiter zu entwikkeln, daß auch bei kompletten Bauteilen eine Dämpfung von Schwingungen prinzipiell auch ohne Leitmittelzusätze stattfindet. Ferner ist es Aufgabe der Erfindung ein Gemenge sowie Verfahren zur Herstellung eines derartigen Bauteils bereitzustellen.

Die Aufgabe wird durch ein Bauteil mit den Merkmalen des Anspruchs 1 bzw. bzgl. des Gemenges und des Verfahrens jeweils mit den Merkmalen der Ansprüche 14 bzw. 16 - 20 gelöst. Trotz der gegenläufigen Erkenntnisse der zugrundegelegten Schrift ist es durch die Verwendung von vorpolarisierten Piezopartikeln, d. h. von Piezopartikeln, die bereits für sich eine Polarisierung aufweisen, sogar bei kompletten Bauteilen möglich, ohne die Hinzunahme von Leitmittelzusätzen und insbesondere einer genau definierten Leitmittelmenge, eine Dämpfung zu erreichen.

Vorteilhafte Ausgestaltungen der Erfindung sind den jeweils zugehörigen Ansprüchen entnehmbar. Im übrigen wird die Erfindung anhand von in den Beispielen und den nachfolgen Figuren dargestellten Ausführungsbeispielen näher erläutert. Dabei zeigt

Fig. 1    ein Piezopartikel mit seinen Kristalldomänen ohne Vorzugspolarisation,

Fig. 2    ein Piezopartikel mit seinen Kristallbezirke mit Vorzugspolarisation,

Fig. 3    ein Bauteil, das eine Gesamtpolarisation aufweist,

Fig. 4    ein Bauteil, das keine Gesamtpolarisation aufweist,

Fig. 5    einen Querschnitt durch ein Bauteil, das aus mehreren Lagen gebildet ist,

Fig. 6    ein Diagramm des Verlustfaktors über der Frequenz einer mit einem und einer ohne einen äußeren ohmschen Widerstand beschalteten Probe,

Fig. 7    ein Diagramm des Verlustfaktors über der Frequenz einer Probe und

Fig. 8    ein weiteres Diagramm des Verlustfaktors über der Frequenz einer weiteren Probe.

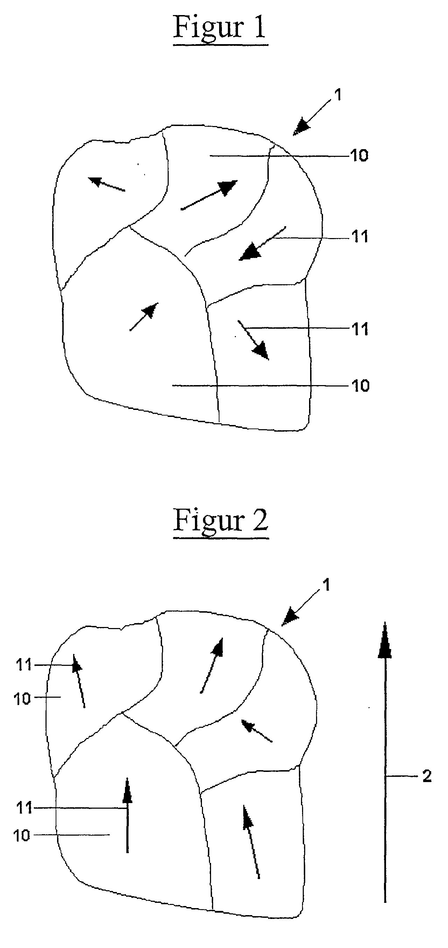

In Figur 1 ist ein Piezopartikel 1 einer Piezokeramik dargestellt. Dieses sogenannte Piezopartikel 1 weist verschiedene Kristalldomänen 10 unterschiedlicher Domänenpolarsation 11 auf. Aufgrund der normal vorliegenden statistischen Verteilung der einzelnen Domänenpolarisationen 11 ist die (Partikel-) Polarisation 2 des Piezopartikels 1, also die Summe aller Domänenpolarisationen 11 des Piezopartikels 1, gleich Null.

Wird ein Piezopartikel 1 gemäß Figur 1 einem elektrischen Feld ausgesetzt, richten sich - wie in Figur 2 dargestellt - die Domänenpolarisationen 11 entlang den elektrischen Feldlinien aus. Durch die Ausrichtung der einzelnen Domänenpolarisationen 11 der Piezopartikel 1 weist ein jedes Piezopartikel 1 anschließend eine von Null verschieden Partikelpolarisation 2 auf. Die Ausrichtung der Domänenpolarisationen 11 und damit die Partikelpolarisation 2 ist bis zur Sättigungsfeldstärke umso höher, je stärker das ausrichtende E-Feld ist.

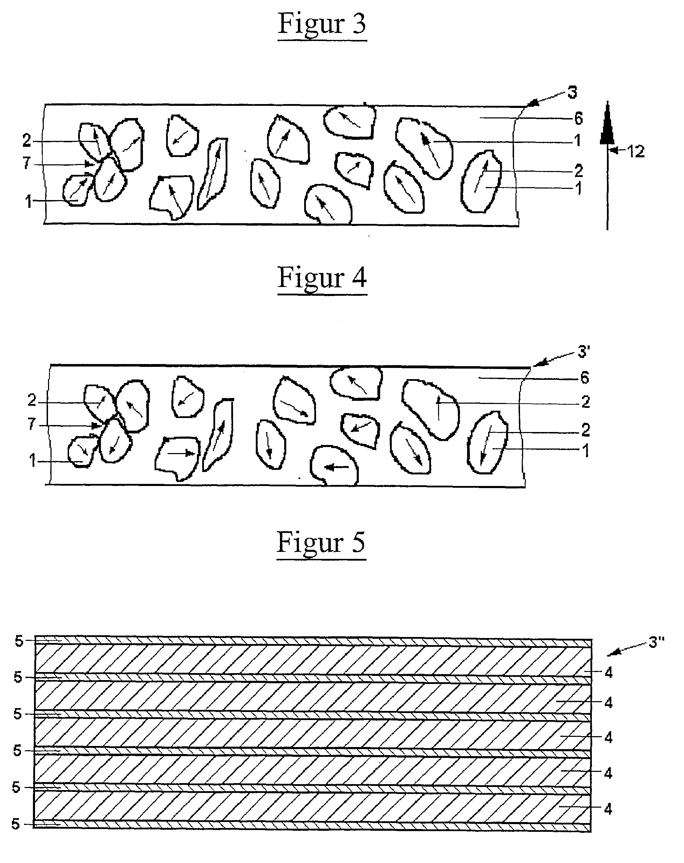

In Figur 3 ist ein Bauteil 3 dargestellt, das in einer Polymermatrix aus einem vernetzten Matrixpolymer 6 beliebig verteilt angeordnete Piezopartikel 1 aufweist. Die innerhalb des Bauteils 3 statistisch verteilt angeordneten Piezopartikel 1 weisen jeweils eine von Null verschiedene Partikelpolarisation 2 auf. Als Matrixpolymere 6 sind piezoinaktive Polymere ausreichend.

Die einzelnen Piezopartikel 1 sind innerhalb der Polymermatrix vorzugsweise vereinzelt und räumlich voneinander getrennt. Ferner können zumindest einige der Piezopartikel 1 auch in Clustern 7 auftreten. In diesen Clustern 7 sind die Piezopartikel 1 sehr dicht beieinander und/oder berühren sich sogar. Der Anteil der Piezopartikel 1 an einem erfindungsgemäßen Bauteil 3 beträgt sinnvollerweise 10-80 Vol-%, bevorzugt 30-70 Vol% und besonders bevorzugt 40-60 Vol%.

Die einzelnen Partikelpolarisationen 2 weisen eine Vorzugsrichtung auf. Daher ergibt sich für das Bauteil 3 in der Gesamtheit eine (Gesamt-)Polarisation 12, die von Null verschieden ist. Die Ausrichtung der Partikelpolarisation 2 kann bspw. durch das Anlegen eines elektrischen Feldes während eines der bekannten formgebenden Verfahren zur Herstellung eines Bauteils aus Kunststoff wie Formspritzen und/oder -pressen und dgl. und/oder vor dem Einbringen eines entsprechenden Gemenge in ein derartiges Formwerkzeug vorgenommen werden.

In Figur 4 ist ebenfalls ein Bauteil 3' mit schwingungsdämpfenden Eigenschaften dargestellt. Im Gegensatz zu dem vorhergegangenen Ausführungsbeispiel gemäß Figur 3 sind hier aber die einzelnen von Null verschiedenen Partikelpolarisationen 2 in ihrer Gesamtheit statistisch ausgerichtet, so daß die Gesamtpolarisation 12 der Beschichtung 3' gleich Null ist; d.h. für die einzelnen von Null verschiedenen Partikelpolarisation 2 existiert keine Vorzugsrichtung.

In Figur 5 ist ein Bauteil 3" mit schwingungsdämpfenden Eigenschaften dargestellt, das aus mehreren Lagen gebildet ist. Bei diesem Bauteil 3" ist zwischen den einzelnen die Partikelpolarisation 2 aufweisenden Piezopartikel 1 beinhaltenden Lagen - im folgenden Piezolagen 4 genannt - eine Trennschicht 5 angeordnet, die die einzelnen Piezolagen 4 zumindest bereichsweise voneinander trennt.

Als Trennschicht 5 wird vorzugsweise eine dünne Metallschicht verwendet. Die Schichtdicke der vorzugsweise metallenen Trennschicht 5 ist insbesondere kleiner 200 µm, bevorzugt kleiner 100 µm und besonders bevorzugt kleiner 50 µm.

Generell sollte das Material der Trennschicht 5 gegenüber dem der Piezolage 4 eine geringere Dehnbarkeit aufweisen; d.h. bei einer gleichen Kraftbeanspruchung sollte die Längendehnung der Trennschicht 5 geringer sein als die der Piezolage 4. Dadurch werden bei einer Verwindung und/oder einer Biegung eines mehrlagigen Bauteils 3" die Piezolagen 4 zusätzlich gedrückt, so daß der Dämpfungseffekt des mehrlagigen Bauteils 3" gegenüber deren entsprechenden einlagigen Bauteilen 3, 3' erhöht ist.

Bei allen drei Ausführungsbeispielen (Figur 3, 4 und 5) kann es sinnvoll sein, als Matrixpolymer 6 ein piezoelektrisch aktives Polymer 6 zu verwenden. Ein vorteilhaftes Beispiel hierfür ist das thermoplastische Copolymer aus Vinylidenfluorid und Triflurethylen (VDF und TrFE), das im Gegensatz zum gängigen polymeren Piezostandardmaterial Polyvinyldendifluorid (PVDF) ohne Streckprozesse aktivierbar ist. Desweiteren können auch polymerisierbare piezoaktive Harze, wie z.B. in DE 38 19 947 A1 beschrieben, verwendet werden.

Aus Kostengründen ist es zweckmäßig, als Bindermatrix ein piezoinaktives, hochohmiges Polymer 6 und/oder dessen Vorstufen zu verwenden und nach bekannten Verfahren zu verarbeiten. Ein Beispiel für ein thermoplastisches Polymer ist das als Feinpulver verfügbare Polyvinyldendifluorid/Heaxafluorpropylen-Copolymer (PVDF-HFP), Typ Kynarflex 2801 GL, Elf Atochem. Dies kann vorteilhafterweise in trockener Form homogen gemischt und anschließend z.B. durch Heißpressen zu Filmen verarbeitet werden. Ebenfalls möglich ist die Verwendung von bekannten polymeren bzw. vernetzbaren polymeren Bindern in Form von Lösungen oder Dispersionen. Ferner sind polymerisierbare Harze z.B. aus der Stoffklasse der Urethane, Ester und Epoxyde zu verwenden, die unverdünnt oder gegebenfalls auch mit Lösemittel verdünnt eingesetzt werden können.

Als weitere Ausführungsform ist es möglich piezoaktive Polymere in Partikel- oder Plättchenform anstelle der keramischen Piezopartikel in eine piezoinaktive Polymeratrix einzubringen.

Der Mechanismus der schwingungsdäpfenden Wirkung bei den erfindungsgemäßen Bauteilen 3, 3', 3" ist noch nicht abschließend geklärt. Möglicherweise kann es sich hierbei um Oberflächenund/oder Grenzflächeneffekte handeln.

Der schwingungsdämpfende Effekt kann je nach verwendetem Polymer 6 noch dadurch verbessert werden, daß dem Herstellungsmaterial des Bauteils 3, 3', 3" zur Verbesserung der Ableitung der Ladungen der Piezopartikel 1 noch Leitmittelzusätze zugegeben werden. Als Leitmittelzusätze wird bevorzugt Kohlenstoff (Graphit) und/oder Metallpulver eingesetzt.

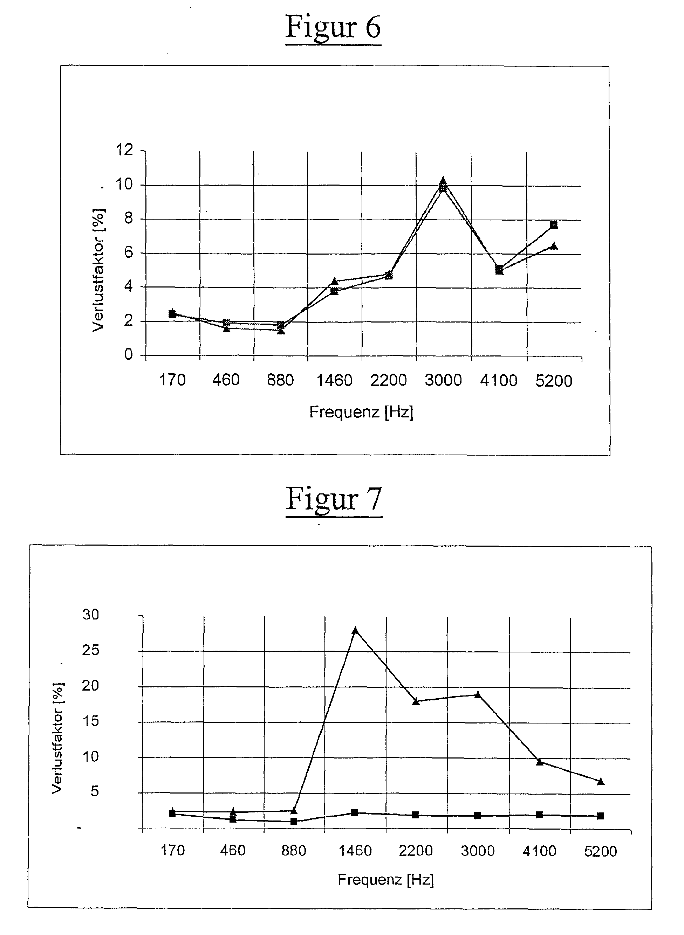

In Figur 6 ist ein Diagramm einer Probe dargestellt, in dem der Verlustfaktor über der Frequenz einer Probe maßstabsgerecht aufgetragen ist. Bei der meßtechnisch bestimmten Ausbildung der Probe handelt es sich um ein dünnes Metallblech, das mit einer Beschichtung versehen wurde, welche das Matrixpolymer 6 und die Piezoprtikel 1 mit einer von Null verschiedenen Gesamtpolarität 12 aufweist. Der genannte Aufbau eines Biegeschwingstabs ist also mit dem des Ausführungsbeispiels gemäß Figur 5 vergleichbar.

Der Verlustfaktor d ist der Quotient aus Imaginärteil E" und Realteil E' des komplexen Elastizitätsmoduls oder des Tangens des Phasenwinkels Ø. Wobei Ø der Phasenwinkel zwischen mechanischer Spannung und Verformung ist [DIN 53440, Ausgabe Jan. 1994, Teil 2, Abschnitt 2.4].

$$d = E'' / E' = \tan Ø$$

d = Verlustfaktor
E" = Verlustmodul: Maß für die, bei der Schwingung nicht wiedergewinnbare Energie
E' = Speichermodul: Maß für die wiedergewinnbare Energie, die beim Verformungswechsel während der Schwingung umgesetzt wird.
Ø = Phasenwinkel

Damit stellt der Verlustfaktor ein Relativmaß für die Energieverluste bei der Schwingung im Vergleich zur wiedergewinnbaren Energie dar.

Der Verlustfaktor kann sowohl über den Zeitbereich aber auch aus der Frequenzdarstellung ermittelt werden. Zweckmäßigerweise erfolgt die Berechnung des Verlustfaktors bei abklingender Biegeschwingung.

Hierzu wird der Biegeschwingstab mit genau definierter Kraft zu erzwungenen Schwingungen erregt. Nach Abschalten der Kraft führt der Biegeschwingstab freie gedämpfte Biegeschwingungen aus. Der Verlustfaktor kann bei abklingender Biegeschwingung über das log. Dekrement oder über die Nachhallzeit berechnet werden. Die Nachhallzeit ist die Dämpfungsgröße im Falle abklingender Schwingungen. Sie ist definiert als Zeitspanne, in der die Amplitude der gedämpften Schwingung auf 1/1000 ihres Anfangswertes oder um 60 Dezibel (dB) abnimmt. An Stelle der Nachhallzeit wird als Dämpfungsgröße auch der Reziprokwert, die Amplitudenabnahme in Dezibel (dB) je Zeit ($D_t$) benutzt [DIN 53440, Ausgabe Jan. 1994, Teil 1, Abschnitt 2.3].

Der Verlustfaktor für Mehrschichtsysteme berechnet sich genauso wie für homogene Systeme. Er ist abhängig von Temperatur und Frequenz.

Zum Vergleich des internen Dämpfungsvermögens des erfindungsgemäßen Bauteils 3'' wurde der Verlustfaktor einer Probe ohne äußere Beschaltung eines ohmschen Widerstandes (quadratische Maßpunkte) und einer Probe mit Beschaltung eines äußeren Widerstandes (dreieckige Meßpunkte) aufgenommen.

Der Unterschied zwischen den beiden Meßreihen ist im Bereich der Meßgenauigkeit angesiedelt. Weitere Versuche, bei denen der Wert des ohmschen Widerstands variiert wurden, ergaben gleichartige Ergebnisse.

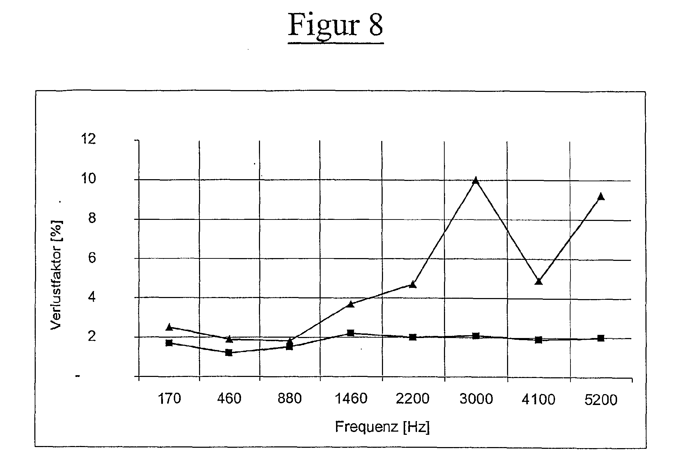

Ferner zeigt der Vergleich von gepolten und ungepolter Referenzproben ohne Zusatz von Leithilfe einen drastischen Anstieg der Dämpfungseigenschaften bei den gepolten Proben (siehe Figur 7 und Figur 8, jeweils gepolte und ungepolte Referenzprobe).

Daher ist unzweifelhaft festzustellen, daß wider Erwarten die Schwingungsdämpfung allein eine Eigenschaft der erfindungsgemäßen Beschichtung 3, 3', 3'' ist. Möglicherweise werden hierbei die durch den Piezoeffekt gebildeten Oberflächenladungen über interne ohmsche Ströme ausgeglichen.

Hilfreich ist für diesen Effekt diesen Ladungsausgleich durch die Zugabe von Leitmitteln wie Metallpulver, Graphit, leitfähige Polymere oder dgl. zu unterstützen. Dies kann insbesondere sinnvoll sein, wenn bei der Herstellung der Bauteile 3, 3', 3'' vorgepolte Piezopartikel 1 verwendet werden.

In den Figuren 7 und 8 sind Diagramme dargestellt, in denen der Verlustfaktor über der Frequenz einer Probe maßstabsgerecht aufgetragen ist.

Für die Prüfung der Schwingungsdämpfung, für die der Verlustfaktor ein Maß ist, wurden die nachfolgend Beispiel 1 und 2 beschriebenen Proben durch Bedampfen mit Aluminium kontaktiert und bei 10kV/mm in einem Silkonbad bei 120°C gepolt (dreieckige Meßpunkte). 4 Streifen (Breite 1cm, Einzellänge 4 cm) wurden hintereinander auf einen Metallstreifen (Länge 20 cm, Dicke 1,0 mm, Breit 1,1 mm) aufgeklebt. Die Schwingundsdämpfung wurde in Anlehnung an Biegeschwingversuch, DIN 53440 gemessen und ausgewertet. Für Vergleichsmessungen wurden auch ungepolte Probestreifen (quadratische Meßpunkte) präpariert.

## Beispiel 1

56,2 Volumen% feingemahlenes PZT-Pulver (PbZrTitanat) mit einer spezifischen Oberfläche von ca. 5m²/g (Typ 501A Ultasonic-Powders) und 43,8 Vol% thermoplastisches Polymerfeinpulver (PVDF/HFP-Copolymer, Typ Kynarflex 2801 GL, Elf Atochem) wurden in einem Taumelmischer trocken durchgemischt und Aliqoute hiervon in einer Pressform heiß gepresst (30min/200°C/ 3,3kN/cm²), so daß 0,5mm dicke Folien entstanden.

## Beispiel 2

56,2 Volumen% feingemahlenes PZT-Pulver mit einer spezifischen Oberfläche von ca. 1 m²/g (Typ 501A Ultasonic-Powders) und 43,8 Vol-% thermoplastisches Polymerfeinpulver (PVDF/HFP-Copolymer, Typ Kynarflex 2801 GL, Elf Atochem) wurden in einem Taumelmischer trocken durchgemischt und Aliqoute hiervon in einer Pressform heiß gepresst (30 min/200 °C/ 3,3k N/cm²), so daß 0,5mm dicke Folien entstanden.

In beiden Diagrammen ist eine deutliche Erhöhung des Verlustfaktors bei den gepolten Proben; d.h. bei den Proben, deren Piezopartikel 1 eine von Null verschiedene Partikelpolarisation 2 aufweisen, zu erkennen.

Bei den Proben gemäß Beispiel 1 bzw. 2 sind die quantitativen Kenngrößen sowohl hinsichtlich der Materialien, hinsichtlich deren Zusammensetzung und auch hinsichtlich der Herstellung völlig identisch. Einziger Unterschied ist die spez. Oberfläche und damit die mittlere Korngröße der Piezopartikel 1 der Proben.

Ein Vergleich des Diagramms 7 mit dem Diagramm 8 zeigt, daß bei der feinkörnigern Probe (Beispiel 1, Figur 7) der Verlustfaktor und damit die Dämpfungswirkung einer erfindungsgemäßen Beschichtung 3, 3', 3'' über einen breiten, innerhalb des Hörbaren angeordneten Frequenzbereich (880 Hz bis 5200 Hz) größer ist als der Verlustfaktor der grobkörnigen Probe (Beispiel 2, Figur 8).

Des weiteren ist erkennbar, daß die feinkörnigere Probe (Beispiel 1, Figur 7) im unteren Frequenzbereich (880 Hz bis 2200 Hz) sogar um ein Vielfaches besser dämpft als die grobkörnigere Probe (Beispiel 2, Figur 8).

Eine weitere Verbesserung wird erreicht, wenn eine Probe beidseitig mit einem dünnen Metallfilm (bspw. Cu, Dicke 50 μm) belegt wird. Diese Ausgestaltung entspricht im wesentlichen der Grundzelle, als der kleinsten Einheit des Ausführungsbeispieles gemäß Figur 5.

Im folgenden werden unterschiedliche Ausgangsprodukte zur Herstellung einer erfindungsgemäßen Beschichtung 3, 3', 3'' auf einem Substrat 9 vorgestellt.

Die Piezopartikel 1 können bereits ihre von Null verschiedene Partikelpolarisation 2 aufweisen, bevor sie zur Herstellung des Bauteils und/oder eines Gemenges, aus dem dann später das Bauteil hergestellt wird, herangezogen werden. Ferner können Sie auch erst während der Herstellung des Bauteils polarisiert werden. Bei dieser Vorgehensweise und der Verwendung von bereits eine von Null verschiedene Partikelpolarisation 2 aufweisenden Piezopartikel 1, können die Partikelpolarisationen 2 der jeweiligen Piezopartikel 1 zusätzlich noch im Kollektiv ausgerichtet werden. Ferner ist in manchen Fällen sinnvoll darauf zu achten, daß dann die Temperatur bei der Herstellung der Bauteile nicht zu hoch ist, damit sich die einzelnen Piezopartikel 1 nicht wieder entpolarisieren; d.h. ihre Partikelpolarisation 2 verlieren.

Bei der Herstellung von Bauteilen mit vernetzten Matrixpolymeren ist es daher auch zweckmäßig, daß bei einer gewünschten und von Null verschiedenen Gesamtpolarisation 12, die ausrichtende Kraft bzw. Ursache so lange wie möglich, insbesondere bis nach dem Vernetzten der Matrixpolymere 6 zu der Polymermatrix aufrecht erhalten wird.

Zum Einbringen in ein formgebenden Werkzeug kann beispielsweise ein Gemenge verwendet werden, das außer dem Matrixpolymer 6 und/oder dessen Ausgangsmaterialien zweckmäßigerweise schon die Partikelpolarisation 2 aufweisenden Piezopartikel 1 beinhaltet.

Des weiteren ist es möglich, die Piezopartikel 1 erst beim Einbringen in das Formwerkzeug und/oder im un- oder gering vernetzten Gemenge zu polarisieren. In den beiden letzten Fällen können auch bereits eine Partikelpolarisation 2 aufweisende Piezopartikel 1 zusätzlich im Kollektiv ausgerichtet werden.

Zur Erhöhung der Festigkeit ist es sinnvoll, daß dem Matrixpolymer 6 zusätzlich Fasern und/oder Gewebematten, vorzugsweise grobmaschige Gewebematten, beigegeben werden. Als Material für die Fasern und/oder Matten wird Glas oder Kohlenstoff bevorzugt. Kohlenstoff als Material ist ferner daher sinnvoll, da dann die Fasern und/oder Matten zusätzlich noch als Elektroden zur Polung der Piezopartikel 1 verwendet werden können.

Bevorzugte Anwendungsgebiete der Erfindung sind im Fahrzeugbau und in der Luftfahrt und hierbei insbesondere bei der Schwingungs- und/oder Schalldämpfung von Komponenten bevorzugt von insbesondere Karosserien (von Kraftfahrzeug oder Flugzeugen, Hubschraubern usw.) und/oder sonstigen Verkleidungsteilen zu sehen.

**Patentansprüche**

1.  Bauteil mit schwingungsdämpfenden Eigenschaften, welches Bauteile granulat- und/oder korn- und/oder plättchenförmigen Piezopartikeln aufweisen, die zumindest zu 10 Vol-% in zumindest einem eine Matrix bildenden Matrixpolymer eingebettet sind,

**dadurch gekennzeichnet,**
**daß** im ausgehärteten Zustand des Matrixpolymers (6) zumindest einige der Piezopartikel (1) für sich jeweils eine von Null verschiedene Polarisation - im folgenden Partikelpolarisation (2) genannt - aufweisen.

2.  Bauteil nach Anspruch 1,
    **dadurch gekennzeichnet,**
    **daß** das Bauteil (3") mehrere Lagen aufweist, wobei zwischen den einzelnen, die von Null verschiedene Partikelpolarisation (2) aufweisenden Piezopartikeln (1) beinhaltenden Lagen - im folgenden Piezolagen (4) genannt - voneinander durch eine Trennschicht (5) voneinander getrennt sind, welche vorzugsweise als dünne Metallschicht ausgebildete Trennschicht (5) eine gegenüber einer Piezolage (4) geringere Dehnbarkeit aufweist.

3.  Bauteil nach Anspruch 1,
    **dadurch gekennzeichnet,**
    **daß** das Matrixpolymer (6) des Bauteils (3, 3', 3") hochohmig ($\geq 10^{10}\ \Omega$ cm) ist.

4.  Bauteil nach Anspruch 1,
    **dadurch gekennzeichnet,**
    **daß** das Bauteil (3, 3', 3") bei Verwendung vorgepolter Piezopartikel einen Widerstand von $\geq 10^{4}\ \Omega$ cm aufweist.

5.  Bauteil nach Anspruch 1,
    **dadurch gekennzeichnet,**
    **daß** das Matrixpolymer (6) des Bauteils (3, 3', 3") bevorzugt piezoinaktiv ist.

6.  Bauteil nach Anspruch 1,
    **dadurch gekennzeichnet,**
    **daß** das Bauteil (3, 3', 3") Leitmittelzusätze wie Kohlenstoff, Metallpulver und/oder ein leitfähiges Polymer aufweist.

7.  Bauteil nach Anspruch 1,
    **dadurch gekennzeichnet,**
    **daß** ein Piezopartikel (1) aus keramischem Pulvermaterial, z.B. PbZrTitanat besteht.

8.  Bauteil nach Anspruch 1,
    **dadurch gekennzeichnet,**
    **daß** ein Piezopartikel (1) aus piezoaktivem Polymermaterial besteht, z.B. aus Polyvinylidendifluorid (PVDF) oder aus einem PVDF-Copolymer z.B. aus Vinylidenfluorid und Triflurethylen (VDF und TrFE) oder aus einem polymerisierbarem piezoaktivem Harz.

9.  Bauteil nach Anspruch 1,
    **dadurch gekennzeichnet,**
    **daß** der Anteil der Piezopartikel (1) an dem Bauteil (3, 3', 3") 10-80 Vol-%, bevorzugt 30-70 Vol-% und besonders bevorzugt 40-60 Vol-% beträgt.

10. Bauteil nach Anspruch 1,
    **dadurch gekennzeichnet,**
    **daß** die spez. Oberfläche der Piezopartikel (1) zwischen 0,1 und 100 $m^2$/g, bevorzugt zwischen 0,5 und 10 $m^2$/g beträgt.

11. Bauteil nach Anspruch 1,
    **dadurch gekennzeichnet,**
    **daß** die jeweilige von Null verschiedene Partikelpolarisation (2) der einzelnen Piezopartikel (1) innerhalb des Bauteils (3, 3', 3") willkürlich, vorzugsweise statistisch ausgerichtet sind.

12. Bauteil nach Anspruch 1,
    **dadurch gekennzeichnet,**
    **daß** die Gesamtheit der jeweiligen von Null verschiedenen Partikelpolarisationen (2) aller Piezopartikel (1) innerhalb des Bauteils (3, 3', 3") eine Gesamtpolarisation (8) aufweist.

13. Bauteil nach Anspruch 1,
    **dadurch gekennzeichnet,**
    **daß** das Bauteil Fasern und/oder Gewebematten, insbesondere grobmaschige Gewebematten, vorzugsweise aus Glas und/oder Kohlenstoff aufweist.

14. Gemenge zur Herstellung eines Bauteils nach Anspruch 1, mittels eines bekannten formgebenden Verfahren für Bauteile aus Kunststoff wie Formspritzen, -pressen oder dgl.
    **dadurch gekennzeichnet,**
    **daß** das Gemenge das vernetztbare Matrixpolymer (6) und/oder dessen Ausgangsmaterialien aufweist und daß die Piezopartikel (1) mit dem Matrixpolymer (6) und/oder dessen Ausgangsmaterialien vermischt sind.

15. Gemenge nach Anspruch 14,
    **dadurch gekennzeichnet,**
    **daß** zumindest einige der Piezopartikel (1) bereits in dem Gemenge für sich eine von Null verschiedene Partikelpolarisation (2) aufweisen.

16. Verfahren zur Herstellung eines Bauteils nach Anspruch 1,
    **dadurch gekennzeichnet,**
    **daß** aus dem Matrixpolymer (6) und/oder dessen Ausgangsmaterialien sowie den Piezopartikel (1) ein partikelhaltiges Gemenge gebildet und vorzugsweise innig miteinander vermischt wird, wobei Piezopartikel (1) mit bereits von Null verschiedener Partikelpolarisation (2) verwendet werden und daß aus dem Gemenge mittels eines bekannten formgebenden Verfahrens für Bauteile aus Kunststoff wie Formspritzen, -pressen oder dgl. das Bauteil (3, 3', 3") geformt und die Polymermatrix vernetzt wird.

17. Verfahren zur Herstellung eines Bauteils nach Anspruch 1,
    **dadurch gekennzeichnet,**
    **daß** aus dem Matrixpolymer (6) und/oder dessen Ausgangsmaterialien sowie den Piezopartikel (1) ein partikelhaltiges Gemenge gebildet wird, daß aus dem vorzugsweise innig miteinander vermischten Gemenge mittels eines bekannten formgebenden Verfahrens für Bauteile aus Kunststoff wie Formspritzen, -pressen oder dgl. das Bauteil (3, 3', 3") geformt wird, daß die geformte Polymermatrix vernetzt wird und daß die Piezopartikel (1) während und/oder nach dem Vernetzen der Polymermatrix mit einer von Null verschiedener Partikelpolarisation (2) versehen werden.

18. Verfahren zur Herstellung eines Bauteils nach Anspruch 1,
    **dadurch gekennzeichnet,**
    **daß** mit dem Matrixpolymer (6) und/oder dessen Ausgangsmaterialien sowie den Piezopartikeln (1) mittels eines bekannten formgebenden Verfahrens für Bauteile aus Kunststoff wie Formspritzen, -pressen oder dgl. ein partikelhaltiger Rohling hergestellt wird und daß die Partikelpolarisation (2) zumindest einiger Piezopartikel (1) zumindest vor einer vollständigen Vernetzung des Matrixpolymers (6), orientiert wird.

19. Verfahren zur Herstellung eines Bauteils nach Anspruch 1, mittels eines bekannten Auftragsverfahrens wie Spritzen oder dgl.
    **dadurch gekennzeichnet,**
    **daß** aus dem Matrixpolymer (6) und/oder dessen Ausgangsmaterialien sowie aus Piezopartikeln (1) ein Gemenge gebildet und vorzugsweise innig miteinander vermischt wird, daß zur Bildung des Gemenges Piezopartikel (1) mit einer von Null verschiedenen Partikelpolarisation (2) beigegeben werden und daß mit dem Gemenge mittels eines bekannten formgebenden Verfahrens für Bauteile aus Kunststoff wie Formspritzen, -pressen oder dgl. das Bauteil (3, 3', 3") geformt und die Polymermatrix vernetzt wird.

20. Verfahren zur Herstellung eines Bauteils nach Anspruch 1,
    **dadurch gekennzeichnet,**
    **daß** ein Gemenge aus dem Matrixpolymer (6) und/oder dessen Ausgangsmaterialien sowie aus Piezopartikeln (1) gebildet und vorzugsweise innig miteinander vermischt wird, daß das Gemenge in ein Formwerkzeug eingebracht wird und daß die Partikelpolarisation (2) zumindest einiger Piezopartikel (1) während dem Einbringen des Gemenges und/oder während dem Vernetzen des Matrixpolymers

(6) orientiert werden.

# Figur 1

# Figur 2

## Figur 3

## Figur 4

## Figur 5

# Figur 6

# Figur 7

# Figur 8